(19) Europäisches Patentamt
European Patent Office
Office européen des brevets

(11) **EP 3 315 926 B1**

(12) **EUROPÄISCHE PATENTSCHRIFT**

(45) Veröffentlichungstag und Bekanntmachung des Hinweises auf die Patenterteilung:
**24.08.2022 Patentblatt 2022/34**

(21) Anmeldenummer: **17198313.3**

(22) Anmeldetag: **25.10.2017**

(51) Internationale Patentklassifikation (IPC):
**G01G 19/08** *(2006.01)*

(52) Gemeinsame Patentklassifikation (CPC):
**G01L 5/16; G01G 19/083**

(54) **VERFAHREN ZUR BESTIMMUNG EINER GEWICHTSKRAFT EINER NUTZLAST FÜR EIN NUTZFAHRZEUG**

METHOD FOR DETERMINING THE FORCE OF GRAVITY OF A PAYLOAD FOR A COMMERCIAL VEHICLE

PROCÉDÉ DE DÉTERMINATION D'UNE FORCE PONDÉRALE D'UNE CHARGE UTILE POUR UN VÉHICULE UTILITAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2016 DE 102016221321**

(43) Veröffentlichungstag der Anmeldung:
**02.05.2018 Patentblatt 2018/18**

(73) Patentinhaber: **Deere & Company**
**Moline, IL 61265 (US)**

(72) Erfinder:
• **Gresch, Valentin**
**68163 Mannheim (DE)**
• **Kremmer, Martin**
**68163 Mannheim (DE)**
• **Isele, Ramon**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**DE-A1-102014 209 695     FR-A1- 2 677 119**
**US-B1- 6 534 728**

• **AUERNHAMMER H ET AL: "WIEGEMOEGLICHKEITEN IN DER SCHLEPPERDREIPUNKTHYDRAULIK", LANDTECHNIK, LANDWIRTSCHAFTSVERLAG, MUNSTER, DE, Bd. 43, 1. Oktober 1988 (1988-10-01), Seiten 414-418, XP002168824, ISSN: 0023-8082**

**Beschreibung**

Die Erfindung betrifft ein Verfahren zur Bestimmung einer Gewichtskraft einer Nutzlast, welche über einen Kraftheber von einer Tragstruktur eines landwirtschaftlichen Nutzfahrzeugs getragen ist.

Aus DE 197 31 089 A1 und FR 2 677 119 sind Einrichtungen zur Gewichtsbestimmung von Lasten bekannt, welche an einem als Traktor ausgebildeten Arbeitsfahrzeug angelenkt sind. Aus den Signalen von Sensoren ermittelt eine Rechenanlage die Größe der angehängten Last und deren Gewichtsveränderung.

Der Erfindung liegt die Aufgabe zugrunde, bei einem Nutzfahrzeug die Gewichtskraft einer Nutzlast mit geringem und einfachem sensorischen Aufwand bestimmen zu können.

Diese Aufgabe wird gemäß den Merkmalen des Anspruches 1 gelöst. Gemäß Anspruch 1 ist bei dem Verfahren zur Bestimmung einer Gewichtskraft einer Nutzlast vorgesehen, dass diese Nutzlast mittels eines Krafthebers von dem Nutzfahrzeug bzw. dessen Tragstruktur getragen ist und dass der Kraftheber mindestens einen Oberlenker und mindestens einen Unterlenker aufweist. Die Gewichtskraft der Nutzlast wird auf der Basis verhältnismäßig einfach ermittelbarer physikalischer Größen am Kraftheber bestimmt. Dabei wird mindestens eine der folgenden Größen ermittelt:

- ein Winkel $\alpha$ zwischen dem Oberlenker und einer Fahrzeug-Horizontalen,
- eine an einer Verbindung zwischen Oberlenker und Nutzlast angreifende und entlang des Oberlenkers wirksame Haltekraft $F_0$.

Abgesehen von der Ermittlung mindestens einer der beiden vorgenannten Größen können noch geeignete Berechnungsvorschriften aufgestellt werden, aus denen sich die Gewichtskraft ergibt. In den Berechnungsvorschriften ist der Aufbau des verwendeten Krafthebers (z.B. Heckkraftheber) bzw. verschiedene physikalische Größen am Kraftheber berücksichtigt. Vorteilhaft werden in den Berechnungsvorschriften je nach verwendetem Sensorkonzept - abgesehen von mindestens einer der beiden vorgenannten Größen - noch mindestens eine der folgenden physikalischen Größen berücksichtigt:

- Dynamik (insbesondere Beschleunigung und/oder Neigung) der Tragstruktur des Nutzfahrzeugs,
- Kraft bzw. Druck in einem Hubzylinder des Krafthebers,
- eine Stützkraft und/oder eine Zugkraft am Unterlenker des Krafthebers,
- momentane Hubhöhe des Krafthebers.

Die für die Bestimmung der Gewichtskraft benötigten physikalischen Größen bzw. deren Beträge können mittels geeigneter Sensoren, beispielsweise Neigungssensoren, Beschleunigungssensoren, Drucksensoren, Winkelsensoren, Kraftmessbolzen ermittelt werden. Die an der Verbindung zwischen Oberlenker und Nutzlast angreifende und entlang des Oberlenkers wirksame Kraft kann beispielsweise mittels Drucksensoren in einem hydraulischen Oberlenker ermittelt werden. Im Falle eines mechanischen Oberlenkers kann diese Kraft z.B. mittels eines biaxialen Kraftsensors (Kraftmessbolzens) bestimmt werden. Vorzugsweise ist dieser biaxiale Kraftsensor an einer Verbindungsstelle positioniert, welche als Verbindung zwischen der Tragstruktur und dem Oberlenker wirkt.

Insgesamt kann mit einer geringen Anzahl als Standardprodukte verfügbarer Sensoren und somit kostengünstig mit wenigen sensierten physikalischen Größen die Gewichtskraft der Nutzlast bestimmt werden. Teilweise können die benötigten Sensoren für andere Zwecke ohnehin bereits am Fahrzeug vorhanden sein, so dass in solchen Fällen der Aufwand für die Bestimmung der Gewichtskraft weiter reduziert ist.

Das landwirtschaftliche Nutzfahrzeug ist z.B. ein Traktor oder Schlepper. Bei der Tragstruktur handelt es sich um eine tragende Struktur des Fahrzeugs, z.B. um einen Rahmen oder andere tragende Teile. Oberlenker und Unterlenker des Krafthebers sind an der Tragstruktur vorzugsweise schwenkbar gelagert bzw. angelenkt, um die jeweilige Nutzlast erforderlichenfalls in unterschiedliche Positionen zu überführen.

Eine schwenkbare Lagerung bzw. Anlenkung an der Tragstruktur bedeutet, dass das jeweilige Bauteil des Krafthebers entweder unmittelbar an der Tragstruktur selbst oder an einem mit der Tragstruktur starr verbundenen Bestandteil (z.B. Gehäuse eines Getriebe-Differenzial-Blocks) des Fahrzeugs gelagert bzw. angelenkt ist. Der Kraftheber bewirkt üblicherweise eine Mehrpunktaufnahme der Nutzlast an dem Fahrzeug. Insbesondere ist eine Dreipunktaufnahme vorgesehen, bei der die Nutzlast mittels zweier Unterlenker und eines Oberlenkers an der Tragstruktur aufgenommen bzw. an der Tragstruktur angelenkt ist.

Bei der Nutzlast handelt es sich vorzugsweise um ein Anbaugerät ohne oder mit einer variablen Zuladung (z. B. Spritzmittel, Streugut, Dünger, Saatgut). Ausgehend von der Gewichtskraft der Nutzlast kann dann auch deren Masse bzw. die Masse der aktuellen Zuladungs-Menge während des Arbeitseinsatzes oder die Veränderung der Zuladungs-Menge während des Arbeitseinsatzes des Nutzfahrzeugs bestimmt werden. Auch bei Nutzlasten bzw. Anbaugeräten (z.B. Hecklader, Ballengabeln, Siloblockschneider), mit denen Transporte durchgeführt werden, ist eine Kenntnis über sich verändernde Massen sinnvoll.

Im Stand der Technik werden der Winkel $\alpha$ des Oberlenkers und die Haltekraft $F_0$ des Oberlenkers benötigt, um mit Hilfe geeigneter Berechnungsvorschriften und etwaiger weiterer, am Nutzfahrzeug gegebenenfalls bereits vorhandener bzw. ermittelter physikalischer Größen die Gewichtskraft der Nutzlast eindeutig zu bestimmen.

bevorzugten Ausführungsform müssen lediglich der Winkel $\alpha$ des Oberlenkers und eine an einer Verbindung zwischen Unterlenker und Nutzlast angreifende Stützkraft $F_{UM}$ bzw. mindestens eine Kraftkomponente dieser Stützkraft $F_{UM}$ ermittelt werden. Basierend auf diesen ermittelten Werten kann wiederum mit Hilfe geeigneter Berechnungsvorschriften und etwaiger weiterer, am Nutzfahrzeug bereits standardmäßig vorhandener bzw. ermittelter physikalischer Größen die Gewichtskraft der Nutzlast eindeutig bestimmt werden.

Vorzugsweise wird die Stützkraft $F_{UM}$ oder mindestens einer ihrer Kraftkomponenten in Abhängigkeit einer Zugkraft $F_U$ (oder einer Zugkraftkomponente) ermittelt, welche an einer Verbindung zwischen dem Unterlenker und der Tragstruktur angreift. Diese Zugkraft bzw. Zugkraftkomponente lässt sich mittels einer Kraftmesseinrichtung oder einem Kraftmessbolzen ermitteln.

Bei einer weiteren bevorzugten Variante wird lediglich die Haltekraft $F_O$ des Oberlenkers und die Stützkraft $F_{UM}$ bzw. mindestens eine Kraftkomponente dieser Stützkraft $F_{UM}$ ermittelt, während der Winkel $\alpha$ des Oberlenkers nicht gemessen wird, so dass die entsprechende Sensorik überflüssig ist. Mit Hilfe geeigneter Berechnungsvorschriften und etwaiger weiterer, am Nutzfahrzeug bereits standardmäßig vorhandener bzw. ermittelter physikalischer Größen können dann zwei mögliche Werte der Gewichtskraft der Nutzlast bestimmt werden. Anhand einer nachfolgenden geeigneten physikalisch-rechnerischen Plausibilitätsabschätzung kann die wahre Gewichtskraft bzw. Masse der Nutzlast bestimmt werden.

Insbesondere werden bei der letztgenannten Variante zumindest der Betrag der Haltekraft $F_O$ des Oberlenkers sowie der Betrag und die Richtung der Stützkraft $F_{UM}$ des Unterlenkers ermittelt. Mathematisch-rechnerisch gesehen werden dann der mögliche Betrag bzw. die möglichen Beträge der Gewichtskraft $F_a$ in einem von der Wirkungsrichtung der Gewichtskraft $F_a$, der Stützkraft $F_{UM}$ und dem Betrag der Haltekraft $F_O$ aufgespannten Kräftedreieck als Abstand von dem Angriffspunkt der Stützkraft $F_{UM}$ zu einem Schnittpunkt auf der Wirkungsrichtung der Gewichtskraft $F_a$ bestimmt. Dabei wird der Schnittpunkt durch den Betrag der Haltekraft $F_O$ zwischen der Stützkraft $F_{UM}$ und der Wirkungsrichtung der Gewichtskraft $F_a$ gebildet.

Vorzugsweise wird die Bestimmung der Gewichtskraft $F_a$ bzw. der davon abgeleiteten Masse unterstützt, indem ein fahrzeugfestes Koordinatensystem definiert wird mit einer parallel zu einer Längsrichtung (Fahrzeug-Horizontale) des Nutzfahrzeugs ausgerichteten x-Achse und einer parallel zu einer Hochrichtung (Fahrzeug-Vertikale) des Nutzfahrzeugs ausgerichteten y-Achse. Dabei schneiden sich die x-Achse und y-Achse in einem Nullpunkt des Koordinatensystems. Hierdurch können für die Bestimmung der Gewichtskraft erforderliche x- und y-Komponenten einzelner Kräfte an dem Kraftheber und/oder der Nutzlast mit verhältnismäßig geringem Aufwand eindeutig ermittelt werden.

Eine etwaige Neigung der Fahrzeug-Horizontalen gegenüber der Erdhorizontalen kann durch die Ermittlung eines entsprechenden Neigungswinkels berücksichtigt werden, falls dies für bestimmte Anwendungen erforderlich sein sollte.

Die Aufgabe wird außerdem gelöst durch eine Anordnung zur Durchführung eines Verfahrens nach einem der Ansprüche 1 bis 5 zur Bestimmung einer Gewichtskraft einer von einer Tragstruktur eines landwirtschaftlichen Nutzfahrzeuges über einen Kraftheber getragenen Nutzlast. Diese Anordnung kann in verschiedenen Ausführungsformen einzelne oder sämtliche der in dieser Offenbarung genannten Sensormittel bzw. Kraftmess- oder Druckmesseinrichtungen enthalten.

Das erfindungsgemäße Verfahren zur Bestimmung einer Gewichtskraft wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1      ein landwirtschaftliches Nutzfahrzeug mit einem Dreipunkt-Kraftheber in einer Seitenansicht,

Fig. 2      ein schematischer Freischnitt des Anbaugerätes,

Fig. 3      ein schematischer Freischnitt des Unterlenkers am Kraftheber,

Fig. 4      ein schematischer Freischnitt der Hubspindel am Kraftheber,

Fig. 5      ein schematischer Freischnitt des Hubarmes am Kraftheber, und

Fig. 6      eine schematische Darstellung von Kräften zur Bestimmung der Gewichtskraft gemäß einer Ausführungsform.

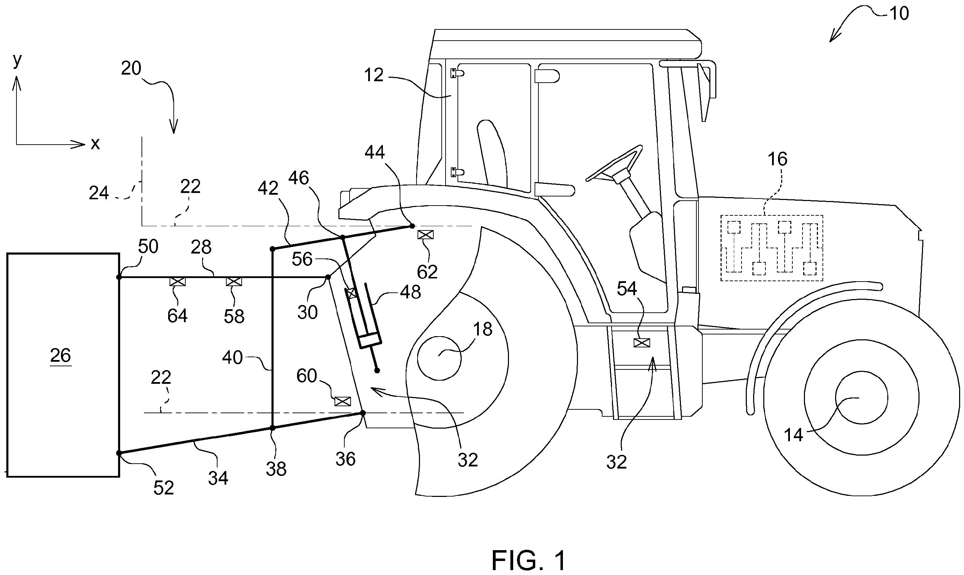

Fig. 1 zeigt ein teilweise nur schematisch dargestelltes landwirtschaftliches Nutzfahrzeug 10 in Form eines Schleppers mit einer Kabine 12, einer Vorderachse 14 und einem Verbrennungsmotor 16 zum Antrieb mindestens einer Hinterachse 18. An den Heckbereich des Nutzfahrzeugs 10 ist ein nicht maßstabsgetreu und prinzipiell dargestellter Dreipunkt-Kraftheber 20 angebracht. Zusätzlich oder alternativ kann ein derartiger Dreipunkt-Kraftheber auch an den Frontbereich des Nutzfahrzeugs 10 angebracht sein. Von dem Dreipunkt-Kraftheber 20 ist eine ebene Kinematik in einer Ebene aufgespannt, die anhand der weiteren Zeichnungen als eine x-y-Ebene bezeichnet ist. Dabei entspricht die x-Richtung einer Fahrzeug-Längsrichtung bzw. Fahrzeug-Horizontalen 22, während die y-Richtung einer Fahrzeug-Hochrichtung bzw. Fahrzeug-Vertikalen 24 entspricht. Der Dreipunkt-Kraftheber 20 dient zum Heben bzw. Tragen eines Anbaugerätes 26, welche als eine Nutzlast bezeichnet werden kann.

Der Dreipunkt-Kraftheber 26 umfasst einen Oberlenker 28, der über eine Anlenkung 30 im heckseitigen Bereich einer Tragstruktur 32 des Nutzfahrzeugs 10 gelenkig befestigt ist. Weiterhin umfasst der Dreipunkt-Kraftheber 26 einen Unterlenker 34, der über ein Stützlager 36 ebenfalls am heckseitigen Bereich der Tragstruktur 32 gelenkig befestigt ist. Der Unterlenker 34 ist über eine in einem Unterlenkergelenk 38 angreifende Hubspindel 40 mit dem einen Ende eines Hubarmes 42 verbunden, der mit seinem anderen Ende über eine Anlenkung 44 gelenkig mit der Tragstruktur 32 des Nutzfahrzeugs 10 verbunden ist. Der Hubarm 42 ist über einen in einem Hubarmgelenk 46 angreifenden und gegen die Tragstruktur 32 abgestützten Hydraulikzylinder 48 gegenüber der Tragstruktur 32 schwenkbar. Das Schwenken des Hubarmes 42 mittels des Hydraulikzylinders 48 wird über die Hubspindel 40 auf den Unterlenker 34 übertragen. Die Länge der Hubspindel 40 ist verstellbar, so dass Winkellagen des Hubarmes 42 und des Unterlenkers 34 zueinander verstellt werden können. Oberlenker 28 und Unterlenker 34 sind auf der von dem Nutzfahrzeug 10 in Fahrzeug-Längsrichtung (x-Richtung) abgewandten Seite über einen Oberlenker-Anlenkpunkt 50 bzw. einen Unterlenker-Anlenkpunkt 52 mit dem Anbaugerät 26 verbunden. Die Anlenkung 30 und der Oberlenker-Anlenkpunkt 50 können in Fahrzeug-Hochrichtung (y-Richtung) verstellt werden, so dass der Oberlenker 28 verschiedene, hier nicht dargestellte vertikale Positionen zur Einstellung einer Masthöhe einnehmen kann.

In Fig. 1 sind am Nutzfahrzeug 10 schematisch und nicht maßstabsgetreu mehrere Sensormittel vorgesehen, welche der Messung bzw. Aufnahme verschiedener physikalischer Größen an einzelnen Bestandteilen des Krafthebers 20 dienen, um daraus eine Gewichtskraft bzw. Masse des Anbaugerätes 26 zu bestimmen.

Erste Sensormittel 54 sind als ein fahrzeugfest angeordneter Beschleunigungssensor (alternativ Neigungs- oder Drehratensensor) ausgebildet. Mittels zweiter Sensormittel 56 am Hubzylinder 48 wird vorzugsweise der hydraulische Druck am Hubzylinder 48 gemessen. Hierbei kann vor der Messung des Drucks im Hubzylinder 48 zur Herstellung eines definierten Zustands eine Reibungskompensation durch definiertes, minimales Verfahren des Zylinderkolbens erfolgen. Dritte Sensormittel 58 (vorzugsweise Inertial- oder Neigungssensor) ermitteln einen Winkel $\alpha$ zwischen dem Oberlenker 28 und der Fahrzeug-Horizontalen 22. Vierte Sensormittel 60 (z.B. Kraftmessbolzen, Biegestab) messen eine Zugkraft am Unterlenker 34. Fünfte Sensormittel 62 (vorzugsweise ein bereits vorhandener Sensor zur Messung des Winkels zwischen dem Hubarm 42 und der Fahrzeug-Horizontalen 22) ermitteln die Hubhöhe des Krafthebers 20. Sechste Sensormittel 64 ermitteln eine Haltekraft $F_O$ des Oberlenkers 28. Beispielsweise können sie den Druck im Falle eines hydraulischen Oberlenkers 28 messen. Je nach Ausführungsform zur Bestimmung der Gewichtskraft der Zusatzlast bzw. des Anbaugerätes 26 kann auf einzelne der genannten Sensormittel verzichtet werden, so dass sich unterschiedliche Anordnungen mit einer unterschiedlichen Kombination von Sensormitteln zur Durchführung des Verfahrens zur Bestimmung der Gewichtskraft bzw. einer davon abgeleiteten Masse ergeben können. Die von den Sensormitteln bereitgestellten Messwerte werden einem Steuergerät zur weiteren Verarbeitung zugeführt. Diese nimmt zugleich eine Mittelung der Messdaten zur Kompensation von ansonsten nicht berücksichtigten rotatorischen Trägheitskräften vor, die durch dynamische Schwingungen induziert werden.

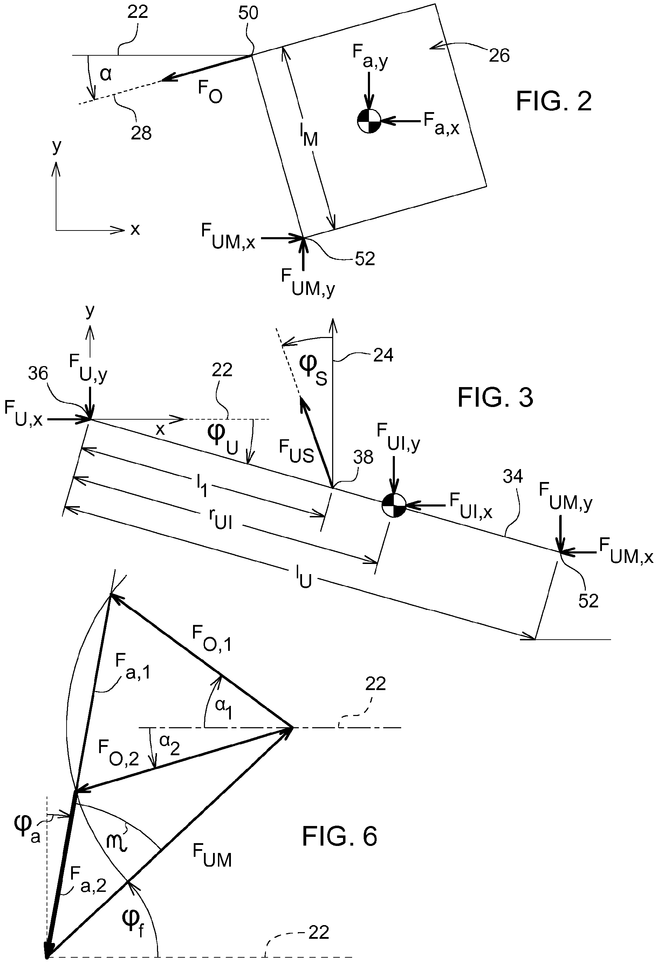

Fig. 2 zeigt schematisch das an den Dreipunkt-Kraftheber 20 angehängte Anbaugerät 26 mit daran angreifenden Kräften. Es ist die im Masseschwerpunkt des Anbaugerätes 26 angreifende x-Komponente $F_{a,x}$ und y-Komponente $F_{a,y}$ der mit $F_a$ bezeichneten Gewichts- bzw. Trägheitskraft darstellt, wobei sich letztere als Überlagerung aus der Gewichtskraft und gegebenenfalls fahrtbedingt auftretenden Vertikalbeschleunigungen ergibt. Außerdem greift an dem Oberlenker-Anlenkpunkt 50 eine Haltekraft $F_O$ des Oberlenkers 28 in einem Winkel $\alpha$ gegenüber der Fahrzeug-Horizontalen 22 an. Am Unterlenker-Anlenkpunkt 52 greift eine Stützkraft $F_{UM}$ mit ihren zwei Kraftkomponenten $F_{UM,x}$ und $F_{UM,y}$ an. Eine Masthöhe ist mit $l_M$ bezeichnet.

Anhand der Kräftegleichgewichte in x- und y-Richtung in Fig. 2 sind folgende Gleichungen für eine Bestimmung der Gewichtskraft $F_a$ bzw. der Masse $m_A$ des Anbaugerätes 26 herleitbar:

$$0 = F_{UM,x} - F_{a,x} - F_O \cdot \cos\alpha \qquad (1)$$

$$0 = F_{UM,y} - F_{a,y} - F_O \cdot \sin\alpha \qquad (2)$$

Hierbei gilt für die x- und y-Komponente der Gewichtskraft $F_a$:

$$F_{a,x} = m_A \cdot a_x \qquad\qquad (3)$$

$$F_{a,y} = m_A \cdot a_y \qquad\qquad (4)$$

Aufgrund von verschiedenen Hangneigungen des Nutzfahrzeugs und zusätzlich auftretenden Beschleunigungsanteilen während der Fahrt ergeben sich veränderliche Beschleunigungsanteile $a_x$ und $a_y$, welche jedoch für alle betrachteten Körper gleich sind. Diese beinhalten bereits die Erdbeschleunigung und werden durch die an der Tragstruktur 32 befestigten Sensormittel 54 aufgenommen.

Gemäss dem Stand der Technik, können die Oberlenker-Haltekraft $F_O$ und der Winkel $\alpha$ des Oberlenkers 28 mittels der Sensormittel 64 und 58 ermittelt werden.

Eine Ermittlung der Stützkraft $F_{UM}$ bzw. seiner x- und y-Komponenten am Anlenkpunkt 52 ist nicht erforderlich. Somit können auch die entsprechenden Sensormittel 60 am Stützlager 36 entfallen. Stattdessen werden die beiden Kraftkomponenten $F_{UM,x}$ und $F_{UM,y}$ mit weiteren physikalischen Zusammenhängen in Beziehung gesetzt. Hierfür eignet sich das Momentengleichgewicht um das Stützlager 36 am Unterlenker 34. Anhand von Fig. 3 ergeben sich dabei folgende Gleichungen, wodurch die Kraftkomponenten $F_{UM,x}$ und $F_{UM,y}$ als Unbekannte enthalten sind:

$$0 = M(F_{US}) + M(F_{UI}) + M(F_{UM}) \qquad\qquad (5)$$

mit

$$M(F_{US}) = F_{US} \cdot l_1 \cdot (\cos\varphi_S \cdot \cos\varphi_U - \sin\varphi_S \cdot \sin\varphi_U) \qquad\qquad (6)$$

$$M(F_{UI}) = -r_{UI} \cdot (F_{UI,x} \cdot \sin\varphi_U + F_{UI,y} \cdot \cos\varphi_U) \qquad\qquad (7)$$

$$M(F_{UM}) = -l_U \cdot (F_{UM,x} \cdot \sin\varphi_U + F_{UM,y} \cdot \cos\varphi_U) \qquad\qquad (8)$$

Die Gleichungen (6) bis (8) können in Gleichung (5) eingesetzt werden. Mittels der Gleichungen (1) bis (4) kann dann nach der zu bestimmenden Masse $m_A$ aufgelöst werden bzw. die entsprechende Gewichtskraft $F_a$ bestimmt werden.

Dabei müssen noch die Kraftkomponenten $F_{UI,x}$ und $F_{UI,y}$, die Winkel $\varphi_S$ und $\varphi_U$ sowie sowie die Kraft $F_{US}$ ermittelt werden. Die Kraftkomponenten $F_{UI,x}$ und $F_{UI,y}$, können mittels eines am Unterlenker 34 angeordneten Beschleunigungssensors gemessen werden (Fig. 3). Die Winkel $\varphi_S$ und $\varphi_U$ lassen sich aus der Geometrie des Krafthebers und der Hubhöhe (Ausfahrlänge) des Hubzylinders berechnen. Dabei wird die Hubhöhe insbesondere kapazitiv gemessen und steht bereits standardmäßig über einen Datenbus (z.B. CAN-Bus) des Nutzfahrzeugs 10 zur Verfügung.

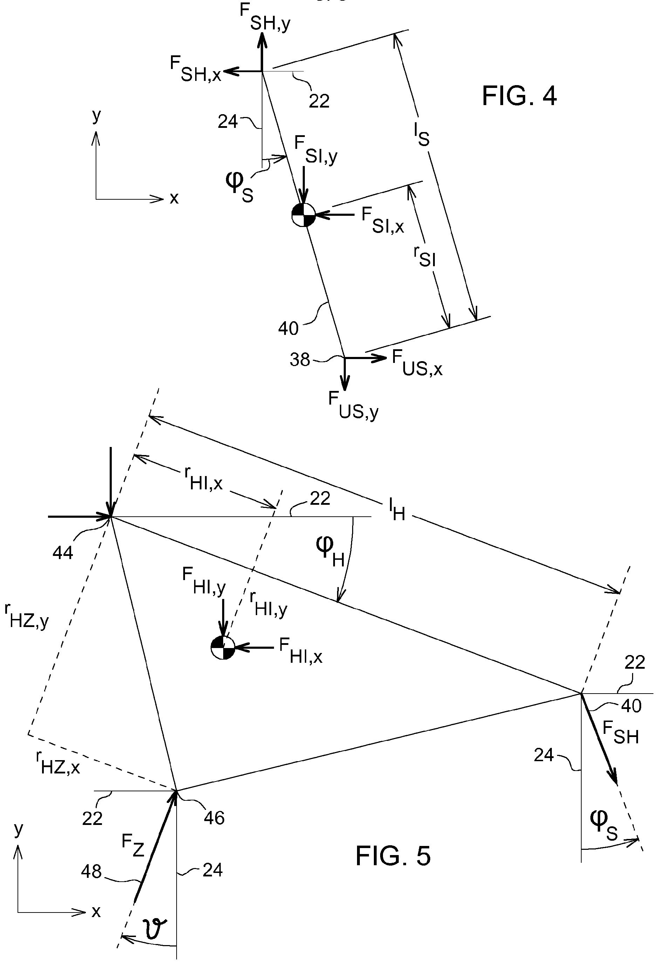

Für die zu berechnende Kraft $F_{US}$ können anhand von Fig. 4 folgende Gleichungen angesetzt werden:

$$F_{US,x} = F_{SH,x} + F_{SI,x} \qquad\qquad (9)$$

$$F_{US,y} = F_{SH,y} - F_{SI,y} \qquad\qquad (10)$$

und

$$F_{SH,x} = F_{SH} \cdot \sin\varphi_S \qquad\qquad (11)$$

$$F_{SH,y} = F_{SH} \cdot \cos\varphi_S \qquad\qquad (12)$$

Die Kraftkomponenten $F_{SI,x}$ und $F_{SI,y}$ werden durch einen Beschleunigungssensor an der Hubspindel 40 zur Verfügung gestellt (Fig. 4). Die Kraft $F_{SH}$ lässt sich anhand der in Fig. 5 am Hubarm 42 angreifenden Kräfte wie folgt

berechnen:

$$F_{SH} = (M_Z + M_{HI}) / (l_H \cdot \cos\varphi_H \cdot \cos\varphi_H - l_H \cdot \sin\varphi_H \cdot \sin\varphi_H) \quad (13)$$

mit

$$M_Z = -F_{Z,x} \cdot (\sin\varphi_H \cdot r_{HZ,x} + r_{HZ,y} \cdot \cos\varphi_H)$$
$$- F_{Z,y} \cdot (\cos\varphi_H \cdot r_{HZ,x} - r_{HZ,y} \cdot \sin\varphi_H) \quad (14)$$

$$M_{HI} = -F_{HI,x} \cdot (r_{SH,x} \cdot \sin\varphi_H - r_{SH,y} \cdot \cos\varphi_H)$$
$$- F_{HI,y} \cdot (-r_{SH,x} \cdot \cos\varphi_H + r_{SH,y} \cdot \sin\varphi_H) \quad (15)$$

und

$$F_{Z,x} = F_Z \cdot \sin\vartheta \quad (16)$$

$$F_{Z,y} = F_Z \cdot \cos\vartheta \quad (17)$$

Der Winkel $\varphi_H$ bildet den Winkel zwischen dem Hubarm 42 und der Fahrzeug-Horizontalen 22. Dieser Winkel $\varphi_H$ lässt sich aus der Geometrie des Krafthebers 20 und der Hubhöhe (Ausfahrlänge) des Hubzylinders berechnen. Die Kraftkomponenten $F_{HI,x}$ und $F_{HI,y}$ werden durch einen Beschleunigungssensor an dem Hubarm 42 zur Verfügung gestellt (Fig. 5).

Letztlich wird die Kraft $F_{US}$ in Abhängigkeit der Kraft $F_z$ im Hubzylinder 48 und des Winkels $\vartheta$ zwischen dem Hubzylinder 48 und der Fahrzeug-Vertikalen 24 berechnet. Die Kraft $F_z$ im Hubzylinder 48 wird vorzugsweise mittels Messung des hydraulischen Drucks im Hubzylinder 48 durch die am Hubzylinder 48 angeordneten Sensormittel 56 ermittelt. Der Winkel $\vartheta$ lässt sich auf hier nicht näher dargestellte Weise über die Geometrie des Krafthebers 20 und den Winkel $\varphi_H$ ermitteln.

Zusammengefasst werden bei diesem Verfahren

- der Winkel $\alpha$ des Oberlenkers 28 mittels der Sensormittel 58,
- die Haltekraft $F_O$ des Oberlenkers 28 mittels der Sensormittel 64, und
- der Druck ($F_z$) im Hubzylinder 48 mittels der Sensormittel 56 gemessen, um in Abhängigkeit dieser Größen die Gewichtskraft $F_a$ des Anbaugerätes 26 bzw. dessen Masse $m_A$ zu bestimmen.

Bei einer ersten Ausführungsform zur Bestimmung der Gewichtskraft bzw. Masse des Anbaugerätes 26 wird auf die Sensormittel 64 zur Messung der Oberlenker-Haltekraft $F_O$ verzichtet. Stattdessen werden die Messwerte der Sensormittel 60 (z.B. als Zugkraftsensor ausgebildet) der Kraft $F_U$ am Stützlager 36 des Unterlenkers 34 berücksichtigt. Die Kraft $F_{US}$ wird wieder - analog zur ersten Ausführungsform - über die Messung des Drucks ($F_z$) im Hubzylinder 48 ermittelt. Die Kraftkomponenten $F_{UM,x}$ und $F_{UM,y}$ können dann explizit berechnet werden. Dies erfolgt unter Berücksichtigung des Freischnittes des Unterlenkers 34 gemäß Fig. 3, unter Verwendung der Gleichungen (5) bis (8) und dem folgenden Kräftegleichgewicht in x-Richtung:

$$F_{UM,x} = F_{U,x} - F_{UI,x} - F_{US} \cdot \sin\varphi_S \quad (18)$$

Dabei wird die x-Komponente $F_{U,x}$ der Zugkraft $F_U$ mittels der Sensormittel 60 gemessen. Anschließend kann unter Berücksichtigung des gemessenen Winkels $\alpha$ des Oberlenkers 28 und der Gleichungen (1), (2) nach der Masse $m_A$ aufgelöst werden bzw. die Gewichtskraft $F_a$ bestimmt werden.

Zusammengefasst werden bei dieser Ausführungsform

- der Winkel $\alpha$ des Oberlenkers 28 mittels der Sensormittel 58,
- die Zugkraft $F_U$, insbesondere deren x-Komponente $F_{U,x}$, am Stützlager 36 des Unterlenkers 34 mittels der Sensormittel 60, und

- der Druck ($F_z$) im Hubzylinder 48 mittels der Sensormittel 56 gemessen, um in Abhängigkeit dieser Größen die Gewichtskraft $F_a$ des Anbaugerätes 26 bzw. dessen Masse $m_A$ zu bestimmen.

Bei einer zweiten Ausführungsform zur Bestimmung der Gewichtskraft bzw. Masse des Anbaugerätes 26 wird auf die Sensormittel 58 zur Messung des Oberlenker-Winkels $\alpha$ verzichtet. Zunächst werden die Kraftkomponenten $F_{UM,x}$ und $F_{UM,y}$ analog zur zweiten Ausführungsform berechnet und zusätzlich die Oberlenker-Haltekraft $F_O$ durch die Sensormittel 64 ermittelt. Nach Anwendung der entsprechenden Gleichungen entstehen bei dieser Ausführungsform zwei mögliche Lösungen für die Gewichtskraft $F_a$.

Die zwei möglichen Lösungen sind graphisch anhand von Fig. 6 dargestellt. Die Resultierende aus den Kraftkomponenten $F_{UM,x}$ und $F_{UM,y}$ ist als $F_{UM}$ bezeichnet und als Vektor dargestellt. Die Richtung der Gewichtskraft $F_a$ ist durch die Beschleunigungsanteile $a_x$ und $a_y$ bekannt und wird durch den Winkel $\varphi_a$ festgelegt. Der Betrag der Oberlenker-Haltekraft $F_O$ ist bekannt; unbekannt ist jedoch deren Richtung aufgrund der fehlenden Messung des Winkels a. Die möglichen Richtungen sind als Kreis mit dem Kreisradius $|F_O|$ und dem Kreismittelpunkt in dem Ende des Kraftvektors von $F_{UM}$ beschrieben. Dieser Kreis schneidet die Richtung der Gewichtskraft $F_a$ an zwei Stellen, so dass zwei mögliche Lösungen ($F_a$,1 und $F_a$,2) für die Gewichtskraft $F_a$ entstehen.

Die Berechnung der beiden möglichen Gewichtskräfte ergibt sich durch Umstellung des Kosinussatzes:

$$\left| F_{a,1} \right| = \left| F_{UM} \cdot cos\eta + \sqrt{(F_{UM} \cdot cos\eta)^2 - (F^2_{UM} - F^2_O)} \right| \qquad (19)$$

$$\left| F_{a,2} \right| = \left| F_{UM} \cdot cos\eta - \sqrt{(F_{UM} \cdot cos\eta)^2 - (F^2_{UM} - F^2_O)} \right| \qquad (20)$$

Die Entscheidung, welche Gewichtskraft bzw. Masse des Anbaugerätes 26 die richtige ist, kann über eine Plausibilitätsabschätzung erfolgen. Hierzu kann beispielsweise eine zweite Messung mit den verwendeten Sensormitteln in einer anderen Hubhöhe des Krafthebers 20 und/oder eine Eingrenzung des möglichen Winkels $\alpha$ des Oberlenkers 28 durchgeführt werden.

Bei der Messung in einer anderen Hubhöhe des Krafthebers 20 ergeben sich erneut zwei mögliche Werte für die Gewichtskraft, von denen einer im Rahmen der Messgenauigkeit mit einem der Werte aus der ersten Messung übereinstimmt. Somit ist die Gewichtskraft bzw. die Masse eindeutig bestimmbar.

Bei der Eingrenzung des Oberlenker-Winkels $\alpha$ wird von dem Gedanken ausgegangen, dass jeder der beiden möglichen Lösungen in Fig. 6 ein Oberlenker-Winkel $\alpha$1 und $\alpha$2 zugeordnet werden kann. Von diesen beiden Winkeln ist einer normalerweise nicht mit der Kinematik und Geometrie des Krafthebers 20 vereinbar. Für eine möglichst genaue Eingrenzung des Oberlenker-Winkels $\alpha$ werden insbesondere die Masthöhe $l_M$, die aktuelle Länge des Oberlenkers 28 und die Anbauposition des Oberlenkers 28 an der Tragstruktur 32 berücksichtigt.

**Patentansprüche**

1. Verfahren zur Bestimmung einer Gewichtskraft ($F_a$) einer von einer Tragstruktur (32) eines landwirtschaftlichen Nutzfahrzeugs (10) über einen Kraftheber (20) getragenen Nutzlast (26), wobei der Kraftheber (20) mindestens einen Oberlenker (28) und mindestens einen über ein Stützlager (36) gelenkig befestigten und mittels eines Hubzylinders (34) über einen Hubarm (42) sowie eine Hubspindel (40) verschwenkbaren Unterlenker (34) aufweist, und wobei die Gewichtskraft ($F_a$) in Abhängigkeit eines Winkels (a) zwischen dem Oberlenker (28) und einer Fahrzeug-Horizontalen (22) oder einer an einer Verbindung (50) zwischen Oberlenker (28) und Nutzlast (26) angreifenden und entlang des Oberlenkers (28) wirksamen Haltekraft ($F_O$) jeweils in Verbindung mit einer am Stützlager (36) mittels eines Kraftmessbolzens (60) gemessenen Zugkraft ($F_U$) und eines in dem Hubzylinder (48) gemessenen Drucks ($F_z$) ermittelt wird, wobei Zugkraft (Fu) und gemessener Druck (Fz) zum Berechnen der Kraftkomponenten (Fum,x und Fum,y) benutzt werden.

2. Verfahren nach Anspruch 1, **dadurch gekennzeichnet, dass** die Gewichtskraft ($F_a$) der Nutzlast (26) in Abhängigkeit einer an einer Verbindung (52) zwischen Unterlenker (34) und Nutzlast (26) angreifenden Stützkraft ($F_{UM}$) oder in Abhängigkeit mindestens einer Kraftkomponente ($F_{UM,x}$, $F_{UM,y}$) der Stützkraft ($F_{UM}$) ermittelt wird.

3. Verfahren nach Anspruch 2, **dadurch gekennzeichnet, dass** die Stützkraft ($F_{UM}$) oder die mindestens eine Kraftkomponente ($F_{UM,x}$, $F_{UM,y}$) in Abhängigkeit der Zugkraft ($F_U$, $F_{U,x}$, $F_{U,y}$) ermittelt wird.

**4.** Verfahren nach einem der vorhergehenden Ansprüche, **dadurch gekennzeichnet, dass**

- der Betrag der Haltekraft ($F_O$) des Oberlenkers (28) ermittelt wird sowie der Betrag und die Richtung der Stützkraft ($F_{UM}$) des Unterlenkers (34) ermittelt wird, und
- der Betrag der Gewichtskraft ($F_a$) in einem von der Wirkungsrichtung der Gewichtskraft ($F_a$), der Stützkraft ($F_{UM}$) und dem Betrag der Haltekraft ($F_O$) aufgespannten Kräftedreieck als Abstand von dem Angriffspunkt der Stützkraft ($F_{UM}$) zu einem Schnittpunkt auf der Wirkungsrichtung der Gewichtskraft ($F_a$) bestimmt wird, wobei der Schnittpunkt durch den Betrag der Haltekraft ($F_O$) zwischen der Stützkraft ($F_{UM}$) und der Wirkungsrichtung der Gewichtskraft ($F_a$) gebildet wird.

**5.** Verfahren nach einem der vorhergehenden Ansprüche, **dadurch gekennzeichnet, dass** zur Ermittlung der Gewichtskraft ($F_a$) ein Koordinatensystem definiert wird mit einer parallel zu einer Längsrichtung (22) des Nutzfahrzeugs (10) ausgerichteten x-Achse und einer parallel zu einer Hochrichtung (24) des Nutzfahrzeugs (10) ausgerichteten y-Achse, wobei sich die x-Achse und die y-Achse in einem Nullpunkt des Koordinatensystems schneiden.

**6.** Anordnung (54, 56, 58, 60, 62, 64) zur Durchführung des Verfahrens nach einem der vorhergehenden Ansprüche zur Bestimmung einer Gewichtskraft ($F_a$) einer von einer Tragstruktur (32) eines landwirtschaftlichen Nutzfahrzeugs (10) über einen Kraftheber (20) getragenen Nutzlast (26), wobei der Kraftheber (20) mindestens einen Oberlenker (28) und mindestens einen über ein Stützlager (36) gelenkig befestigten und mittels eines Hubzylinders (34) über einen Hubarm (42) sowie eine Hubspindel (40) verschwenkbaren Unterlenker (34) aufweist, und wobei die Gewichtskraft ($Fa$) in Abhängigkeit eines Winkels ($a$) zwischen dem Oberlenker (28) und einer Fahrzeug-Horizontalen (22) oder einer an einer Verbindung (50) zwischen Oberlenker (28) und Nutzlast (26) angreifenden und entlang des Oberlenkers (28) wirksamen Haltekraft ($F0$) jeweils in Verbindung mit einer am Stützlager (36) mittels eines Kraftmessbolzens (60) gemessenen Zugkraft ($Fu$) und eines in dem Hubzylinder (48) gemessenen Drucks ($Fz$) ermittelt wird, wobei Zugkraft ($Fu$) und gemessener Druck ($Fz$) zum Berechnen der Kraftkomponenten ($Fum,x$ und $Fum,y$) benutzt werden.

## Claims

**1.** Method for determining a weight ($F_a$) of a payload (26) carried by a supporting structure (32) of an agricultural utility vehicle (10) by way of a power lift (20), wherein the power lift (20) has at least one upper link (28) and at least one lower link (34), which is fastened in an articulated manner by way of a supporting bearing (36) and can be pivoted by means of a lifting cylinder (34) by way of a lifting arm (42) and a lifting spindle (40), and wherein the weight ($F_a$) is determined on the basis of an angle ($\alpha$) between the upper link (28) and a vehicle horizontal (22) or a holding force (Fo) acting on a connection (50) between the upper link (28) and the payload (26) and effective along the upper link (28), in each case in conjunction with a tractive force ($F_U$), measured at the supporting bearing (36) by means of a force measuring pin (60), and a pressure ($F_Z$), measured in the lifting cylinder (48), wherein the tractive force (Fu) and the measured pressure (Fz) are used for calculating the force components (Fum,x and Fum,y).

**2.** Method according to Claim 1, **characterized in that** the weight ($F_a$) of the payload (26) is determined on the basis of a supporting force ($F_{UM}$) acting on a connection (52) between the lower link (34) and the payload (26) or on the basis of at least one force component ($F_{UM,x}$, $F_{UM,y}$) of the supporting force ($F_{UM}$).

**3.** Method according to Claim 2, **characterized in that** the supporting force ($F_{UM}$) or the at least one force component ($F_{UM,x}$, $F_{UM,y}$) is determined on the basis of the tractive force ($F_U$, $F_{U,x}$, $F_{U,y}$).

**4.** Method according to one of the preceding claims, **characterized in that**

- the amount of the holding force (Fo) of the upper link (28) is determined and the amount and the direction of the supporting force ($F_{UM}$) of the lower link (34) are determined, and
- the amount of the weight ($F_a$) is determined in a triangle of forces, defined by the effective direction of the weight ($F_a$), the supporting force ($F_{UM}$) and the amount of the holding force ($F_O$), as the distance from the point of application of the supporting force ($F_{UM}$) to the point of intersection on the effective direction of the weight ($F_a$), wherein the point of intersection is formed by the amount of the holding force ($F_O$) between the supporting force ($F_{UM}$) and the effective direction of the weight ($F_a$).

**5.** Method according to one of the preceding claims, **characterized in that** a coordinate system is defined for deter-

mining the weight ($F_a$), with an x axis aligned parallel to a longitudinal direction (22) of the utility vehicle (10) and a y axis aligned parallel to a vertical direction (24) of the utility vehicle (10), wherein the x axis and the y axis intersect at an origin of the coordinate system.

6. Arrangement (54, 56, 58, 60, 62, 64) for carrying out the method according to one of the preceding claims for determining a weight ($F_a$) of a payload (26) carried by a supporting structure (32) of an agricultural utility vehicle (10) by way of a power lift (20), wherein the power lift (20) has at least one upper link (28) and at least one lower link (34), which is fastened in an articulated manner by way of a supporting bearing (36) and can be pivoted by means of a lifting cylinder (34) by way of a lifting arm (42) and a lifting spindle (40), and wherein the weight (Fa) is determined on the basis of an angle (a) between the upper link (28) and a vehicle horizontal (22) or a holding force (F0) acting on a connection (50) between the upper link (28) and the payload (26) and effective along the upper link (28), in each case in conjunction with a tractive force (Fu), measured at the supporting bearing (36) by means of a force measuring pin (60), and a pressure (Fz), measured in the lifting cylinder (48), wherein the tractive force (Fu) and the measured pressure (Fz) are used for calculating the force components (Fum,x and Fum,y).

## Revendications

1. Procédé de détermination d'un poids ($F_a$) d'une charge utile (26) portée par une structure porteuse (32) d'un véhicule agricole (10) par le biais d'un vérin (20), le vérin (20) comportant au moins un bielle supérieure (28) et au moins un bielle inférieure (34), qui est fixée de manière articulée par le biais d'un palier de support (36) et qui peut pivoter au moyen d'un cylindre de levage (34) par le biais d'un bras de levage (42), ainsi qu'une broche de levage (40), et le poids ($F_a$) étant déterminé en fonction d'un angle (a) entre la bielle supérieure (28) et une horizontale de véhicule (22) ou d'une force de retenue ($F_O$), appliquée au niveau d'une liaison (50) entre la bielle supérieure (28) et la charge utile (26) et agissant le long de la bielle supérieure (28), en liaison avec une force de traction ($F_U$) mesurée au niveau du palier de support (36) à l'aide d'un axe dynamométrique (60) et d'une pression ($F_z$) mesurée dans le cylindre de levage (48), la force de traction (Fu) et la pression mesurée (Fz) étant utilisées pour calculer les composantes de force (Fum,x et Fum,y).

2. Procédé selon la revendication 1, **caractérisé en ce que** le poids ($F_a$) de la charge utile (26) est déterminé en fonction d'une force d'appui ($F_{UM}$), appliquée au niveau d'une liaison (52) entre la bielle inférieure (34) et la charge utile (26), ou en fonction d'au moins une composante de force ($F_{UM,x}$, $F_{UM,y}$) de la force d'appui ($F_{UM}$).

3. Procédé selon la revendication 2, **caractérisé en ce que** la force d'appui ($F_{UM}$) ou l'au moins une composante de force ($F_{UM,x}$, $F_{UM,y}$) est déterminée en fonction de la force de traction ($F_U$, $F_{U,x}$, $F_{U,y}$).

4. Procédé selon l'une des revendications précédentes, **caractérisé en ce que**

   - la norme de la force de retenue ($F_O$) de la bielle supérieure (28) est déterminée et la norme et la direction de la force d'appui ($F_{UM}$) de la bielle inférieure (34) sont déterminées, et
   - la norme de poids ($F_a$) est déterminée dans un triangle de force, délimité par la direction d'action du poids ($F_a$), la force d'appui ($F_{UM}$) et la norme de la force de retenue ($F_O$), comme étant la distance du point d'application de la force d'appui ($F_{UM}$) à un point d'intersection sur la direction d'action du poids ($F_a$), le point d'intersection étant formé par la norme de la force de retenue (Fo) entre la force d'appui ($F_{UM}$) et la direction d'action du poids ($F_a$).

5. Procédé selon l'une des revendications précédentes, **caractérisé en ce que**, pour déterminer le poids ($F_a$), un système de coordonnées est défini avec un axe x orienté parallèlement à une direction longitudinale (22) du véhicule utilitaire (10) et un axe y orienté parallèlement à une direction verticale (24) du véhicule utilitaire (10), l'axe x et l'axe y se coupant en un point zéro du système de coordonnées.

6. Ensemble (54, 56, 58, 60, 62, 64) destiné à la mise en œuvre du procédé selon l'une des revendications précédentes pour déterminer le poids ($F_a$) d'une charge utile (26) portée par une structure porteuse (32) d'un véhicule utilitaire agricole (10) par le biais d'un vérin (20), le vérin (20) comportant au moins un bielle supérieure (28) et au moins un bielle inférieure (34), qui est fixée de manière articulée par le biais d'un palier de support (36) et qui peut pivoter au moyen d'un cylindre de levage (34) par le biais d'un bras de levage (42), ainsi qu'une broche de levage (40), et le poids (Fa) étant déterminé en fonction d'un angle (a) entre la bielle supérieure (28) et une horizontale de véhicule (22) ou d'une force de retenue (F0), appliquée au niveau d'une liaison (50) entre la bielle supérieure (28) et la charge utile (26) et agissant le long de la bielle supérieure (28), en liaison avec une force de traction (Fu) mesurée au niveau du palier de support (36) à l'aide d'un axe dynamométrique (60) et d'une pression (Fz) mesurée dans le cylindre de levage (48), la force de traction (Fu) et la pression mesurée (Fz) étant utilisées pour calculer les composantes de force (Fum,x et Fum,y).

FIG. 1

FIG. 2

FIG. 3

FIG. 6

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19731089 A1
- FR 2677119